# EUROPEAN PATENT APPLICATION

(11) **EP 2 648 152 A1**
(43) Date of publication of application: **09.10.2013**
(21) Application number: 13161599.9
(22) Date of filing: 28.03.2013
(51) Int. Cl.: G06Q 30/02, G06Q 50/00

(54) **Data solutions system**

(30) Priority: 29.03.2012 IN CH12262012
(71) Applicant: Mu Sigma Business Solutions Pvt. Ltd., Bangalore 560066 (IN)
(72) Inventor: Kiran, Karthik, 500010 Secunderabad (IN); Dhingra, Deepinder, 560029 Bangalore (IN)
(74) Representative: Stewart, Hazel

(57) **Abstract**

A system for analyzing a plurality of data sets to determine one or more solutions for a specific problem is provided. The system comprises an analytical module configured to receive a plurality of data sets from a plurality of sources and analyze the plurality of data sets using a data handling module configured to convert the plurality of data sets into an analytics data set. The system also comprises an exploratory analysis module configured to determine a plurality of correlations existing within the analytics data set; wherein the pluralities of correlations are used to determine the one or more solutions. The system further comprises a graphical user interface coupled to the analytical module and configured to enable one or more users to interact with the analytical module and a storage module configured to store the plurality of data sets and the analytics data sets.

## Description

### BACKGROUND

The present invention is related to data solution systems and techniques. More particularly the present invention is related to analyzing several data sets received from multiple sources to provide one or more optimum solutions for a specific problem.

In recent times, as the analytics industry is maturing and competition is increasing, there is an increasing need to justify return of investment (ROI) on analytics spends and prove its business value. It is crucial to keep analytics at the speed of business, especially as the range and number of business problems for analytics based decision-making increases exponentially. In today's rapidly growing global business environment, the need for competent analytical solutions is greater than before.

However, some of the important challenges with existing solutions are the difficulties in driving best practices within the organization and to ensure collaboration and cross learning between teams. There is also a need to free up and re-purpose time of resources from coding and execution to business interpretation. Further, it is desirable to provide tools that nudge towards best practices while executing analytics.

Therefore, there is a need for a system and methods that can build platform that enables reusability and decreases ramp-up time for new-hires and maximize value from current infrastructure investments.

### SUMMARY

Briefly, according to one embodiment of the invention, a system for analyzing a plurality of data sets to determine one or more solutions for one or more problems is provided. The system comprises an analytical module configured to receive a pluarlity of data sets from a plurality of sources and analyze the plurality of data sets using a data handling module configured to convert the plurality of data sets into an analytics data set. The analytical module also comprises an exploratory analysis module configured to determine a plurality of correlations exisiting within the analytics data set; wherein the pluralities of correlations are used to determine the one or more solutions. The system further comprises a graphical user interface coupled to the analytical module and configured to enable one or more users to interact with the analytical module and a storage module configured to store the plurality of data sets and the analytics data sets.

In another embodiment, a computer-implemented system containing one or more processors comprising one or more non-transitory computer-readable storage media is provided. The system includes instructions configured to cause the one or more processors to perform operations including receiving a plurality of data sets from a plurality of sources, conditioning the plurality of data sets to generate an analytics data set and performing exploratory data analysis on the analytic data set to determine a plurality of correlations existing within the analytics data set. The processor further performs operations including generating a plurality of models based on the results of the exploratory data analysis wherein each model provides one or more solutions to achieve a goal defined by a user.

### DRAWINGS

These and other features, aspects, and advantages of the present invention will become better understood when the following detailed description is read with reference to the accompanying drawings in which like characters represent like parts throughout the drawings, wherein:

FIG. 1 is a block diagram of an embodiment of a data analysis system implemented according to aspects of the present technique;

FIG. 2 is a block diagram of an embodiment of an analytical module implemented according to aspects of the present technique;

FIG. 3 is a flow chart illustrating one method by which various data sets from different sources are processed according to aspect of the present technique;

FIG. 4 is a block diagram of a general purpose computer implemented according to aspects of the present technique; and

FIG. 5 to FIG. 12 illustrates example screen shots of a graphical user interface implemented according to aspects of the present technique.

### DETAILED DESCRIPTION

In the following detailed description, reference is made to the accompanying drawings, which form a part hereof. In the drawings, similar symbols typically identify similar components, unless context dictates otherwise. The illustrative embodiments described in the detailed description, drawings, and claims are not meant to be limiting. Other embodiments may be utilized, and other changes may be made, without departing from the spirit or scope of the subject matter presented herein. It will be readily understood that the aspects of the present disclosure, as generally described herein, and illustrated in the figures, can be arranged, substituted, combined, separated, and designed in a wide variety of different configurations, all of which are explicitly contemplated herein.

Example embodiments are generally directed to data solutions systems for analyzing multiple data sets received from several sources to determine solutions for one or more problem. As used herein, data sets received may refer to data sets received from various social media, data sets pertaining to sales of a product, marketing data collected around a marketing campaign for a particular product and the like.

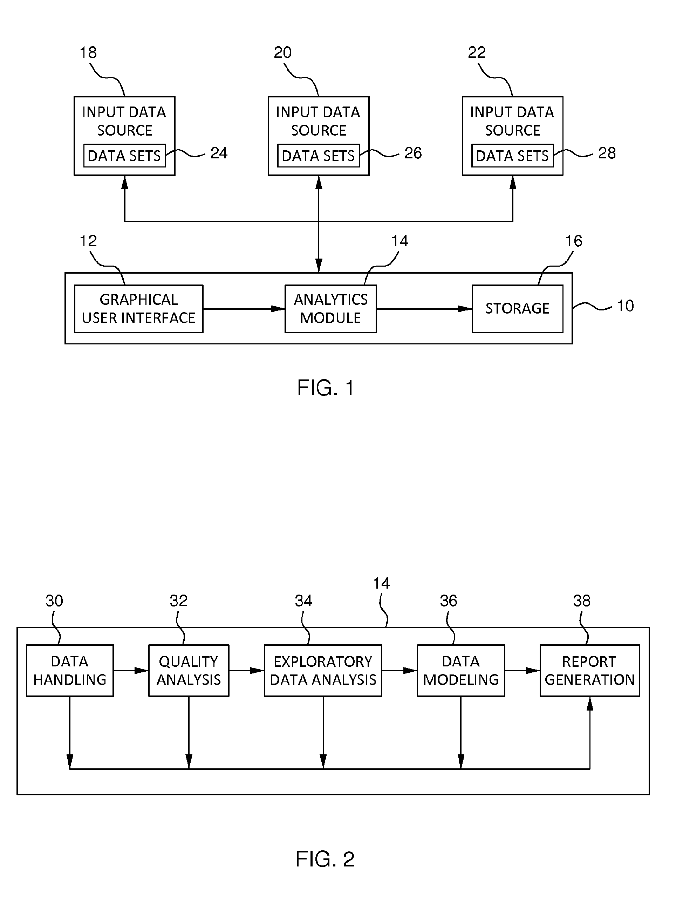

FIG. 1 is a block diagram of an embodiment of a data solutions system configured to receive multiple data sets from various input data sources. The data solutions system 10 is configured to analyze data sets received from various sources to provide a guided, interactive and white-box environment for executing analytics. Each block of the data solutions system 10 is described in further detail below.

The data solutions system 10 is configured to connect to various input data sources 18, 20, and 22 and to access data sets 24, 26 and 28 respectively. Examples of data sets include datasets from social media, sales figures, marketing channels and the like. In one embodiment, a user may select the input data sources from which data sets are to be obtained. As used herein, the term "user" may refer to both natural people and other entities that operate as a "user". Examples include corporations, organizations, enterprises, teams, or other group of peoples. It may also be noted that the user may refer to a data analyst who is trained to perform data analysis on data sets received via different channels.

The data solutions system 10 includes a graphical user interface 12, which is configured to enable one or more users to provide inputs to analytical module 14. In one embodiment, the graphical user interface includes an extensive menu that enables the user to select options that are of interest.

Analytical module 14 is configured to analyze the received data sets to generate optimum solutions based on detailed statistical analysis for a problem that is defined by the user. Examples of such problems may include determining the key drivers fro the sales of a product, or determining the key factors that influence a customer, etc. In general, the analytical module 14 is configured to capture the analytics know-how and project workflow in a manner that makes execution processes guided and efficient. This in turn enables a user to increase the time spent on generating insights. Analytical module 14 is also configured to generate visual representations of the analysis performed on the analytics data sets.

Storage module 16 is configured to store the plurality of data sets and the analytics data sets. Further, the storage module 16 is configured to store the visual representations generated by the analytical module. The analytical module includes several modules, each module is described in further detail below.

FIG. 2 is a block diagram of an embodiment of an analytical module implemented according to aspects of the present technique. As described above, the analytical module 14 is configured to analyze several data sets and generate one or more data models that enables a user to determine one or more solutions for a goal defined by the user. The analytical module 14 includes multiple modules that implement several statistical processes to generate outputs that are beneficial to the user while making key business decisions. It may be noted that, the modules described below can be combined in any order that the user believes is necessary for the problem to be solved or to the goal to be achieved. Each block of the analytical module 14 is described in further detail below.

Data handling module 30 is configured to combine a plurality of data sets received from multiple sources into analytics data sets. The analytics data set is in a suitable format for the analysis module.

Quality analysis module 32 is configured to determine attributes of the analytics data set. For example, unique value provisioning, data profiling, missing or outliner treatments and data transformation are some of the functions performed by the quality analysis module. The quality analysis module is configured to generate the contents report and thereby allows deriving basic characteristics for all the variables in a dataset.

Exploratory data analysis (EDA) module 34 is configured to determine a plurality of correlations that exist within the analytics data set. In one embodiment, the plurality of correlations is used to determine the one or more solutions. The EDA module 34 allows dataset operations, variable processing, data summary, data exploration and data treatment.

The dataset operations allow adding and exporting a dataset at any stage during the analysis. The module also allows data analysis across variables of the dataset. Variable processing in EDA includes renaming and classification of variables into numeric, string and manual categorization on the basis of distinct values in a variable. Additionally, it also includes new variables creation including categorical indicators, event indicators, binning, ad stock variables, lag/lead transformations, moving averages and like.

Other capabilities of EDA module 34 include data summary with a visual representation of analytics dataset, counts of the unique values in a variable and statistical summary with wide range of options. In continuation, data exploration is also one of the key supported capabilities of EDA. It supports visualizations (charts) and custom modules including frequency analysis etc. EDA treats data as univariate, multivariate, missing, outlier & transformation treatments.

In one embodiment, the EDA module implements univariate and bivariate analysis on analytics data set. In one example embodiment quantitative (statistical) analysis on the analytics data set through univariate analysis is performed. The analysis is carried out with the description of a single variable and its attributes of the applicable unit of analysis. The univariate analysis allows attributes like measures of locations, measures of dispersion, normality tests, distributions, percentile values and the combinations thereof. In another example embodiment, exploratory analysis module is configured to apply a multivariate analysis on the analytic data set. The bivariate analysis comprises determining a variation with respect to one or more statistical attributes

The analytical module 14 further comprises data modeling module 36 configured to generate one or more models representative of one or more solutions to a problem specified by a user. In one embodiment, modeling module 36 provides an in depth analysis using regression techniques. In one embodiment, models are generated based on a mean, variance and co-variance of the analytics data set. Data modeling module is configured to support multivariable treatments, new variable creations, and bivariate analysis to study the distributions of independent variables across dependent variable.

Model building options such as step-wise variable elimination, variable segmentation based on correlation and factor analysis, and like can be used and can be built on biased population. It allows easy elimination of variables to iterate through multiple iterations and get the best-fit model. It includes an algorithmic regression for variable elimination and also includes a multivariable outlier diagnostics based on advanced influence statistics.

The analytical module 14 further provides model evaluation and validation capabilities. It is based on model statistics, variable statistics output charts and tables. It has in-sample and out-of-sample validation on different scenarios for accuracy and stability. Bootstrapping can be done to compare model statistics across iterations. Model scoring is also supported that provides scoring on multiple champion models and comparing the outputs.

Reporting module 38 provides easy access to all reports generated by the analysis module from a single user interface. Examples of the types of reports include content report, frequency report, univariate summary report, multivariate summary report and like across all the distinct levels for multiple categorical variables. Additionally, multiple reports with different variables and options can be generated and can be directly exported into formats such as excel, pdf, and the like.

The Reporting module ensures that all outputs are collated at one place for better insight generation for a user. Different reports can be viewed at one place in a reporting framework and results comparison may also be computed. Results can be compared across reports with ease. Insights generation is another feature of this. Insights can be quickly generated using reporting framework and can be easily related to business logic.

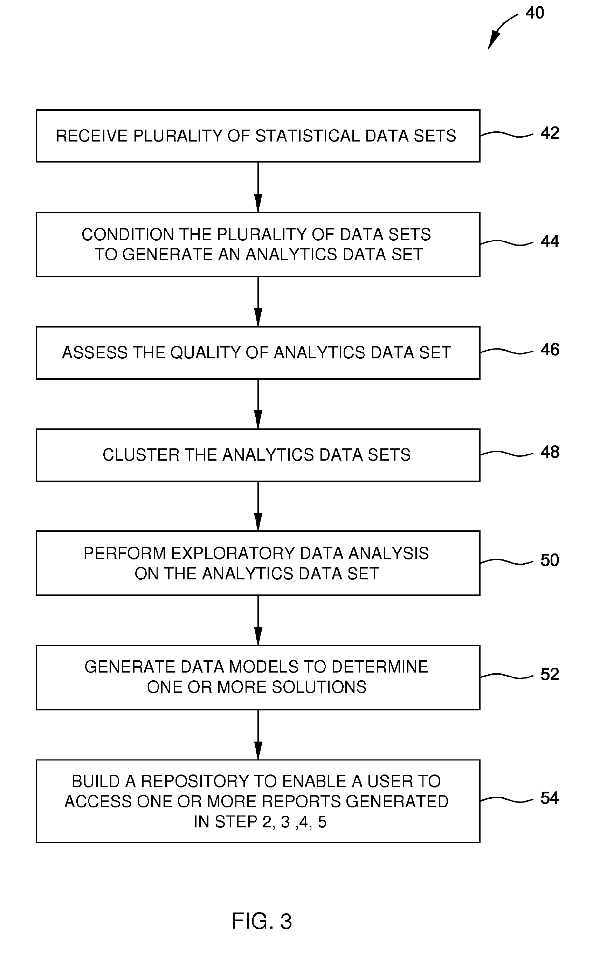

FIG. 3 is a flow chart illustrating one method by which various data sets from different sources is processed according to aspects of the present technique. As described above, different data sets refers to dataset from sales, marketing, social media datasets and the like. The process 40 for analyzing social media data is described in further detail below.

At step 42, data sets are retrieved from one or more input data sources. The data sets received from several sources are analyzed to determine solution for a specific problem. In general, input data set may include keywords for a certain product, the product name, a name of a business or an organization, etc. In one embodiment, data sets include text strings and numeric data.

At step 44, the received data sets are conditioned to generate the analytics data sets. Data handling is performed to create new variables by applying certain conditions. New data sets may also be created by manipulating the existing data sets.

In one example embodiment univariate manipulation on dataset is performed. Univariate manipulation involves selecting increment or decrement operation and specific value by which variables needs to be changed. In another example embodiment bivariate manipulation on dataset was performed. Bivariate manipulation is performed by selecting the operation for two or multiple variables and assigning the operation value to a new variable.

At step 46, the quality of the analytics data set is accessed. Quality assessment requires identifying important dimensions to the operations and requires precisely defining the variables that constitute the dimensions. Example factors which are used for quality assessment are accuracy, completeness, consistency and timeliness.

At step 48 segmentation module clusters the analytic data set based on an attribute, where the attribute is selected by the user using the graphical user interface.

At step 50 the exploratory data analysis is performed on the analytics data set. Exploratory data analysis determines a plurality of correlations existing within the analytics data set that assist in determining one or more solutions for the user defined problem. Exploratory data analysis allows multiple analyses such as univariate analysis, bivaraiate analysis, basic and advanced visualization, crosstab analysis, frequency and property analysis, correlation and time series.

At step 52, the data models are generated to determine one or more solutions. Data modeling provides an in depth analysis of regression techniques and include a pre-model processing. At step 54, repository allows access of all the reports generated during data handling, quality analysis, exploratory data analysis and data model generation steps.

The technique described above can be performed by the data analysis system described in FIG. 1 and FIG. 2. The technique described above may be embodied as devices, systems, methods, and/or computer program products. Accordingly, some or all of the subject matter described above may be embodied in hardware and/or in software (including firmware, resident software, micro-code, state machines, gate arrays, etc.) Furthermore, the subject matter may take the form of a computer program product such as an analytical tool, on a computer-usable or computer-readable storage medium having computer-usable or computer-readable program code embodied in the medium for use by or in connection with an instruction execution system. In the context of this description, a computer-usable or computer-readable medium may be any medium that can contain, store, communicate, propagate, or transport the program for use by or in connection with the instruction execution system, apparatus, or device.

The computer-usable or computer-readable medium may be, for example but not limited to, an electronic, magnetic, optical, electromagnetic, infrared, or semiconductor system, apparatus, device, or propagation medium. By way of example, and not limitation, computer readable media may comprise computer storage media and communication media.

When the subject matter is embodied in the general context of computer-executable instructions, the embodiment may comprise program modules, executed by one or more systems, computers, or other devices. Generally, program modules include routines, programs, objects, components, data structures, etc. that performs particular tasks or implement particular abstract data types. Typically, the functionality of the program modules may be combined or distributed as desired in various embodiments.

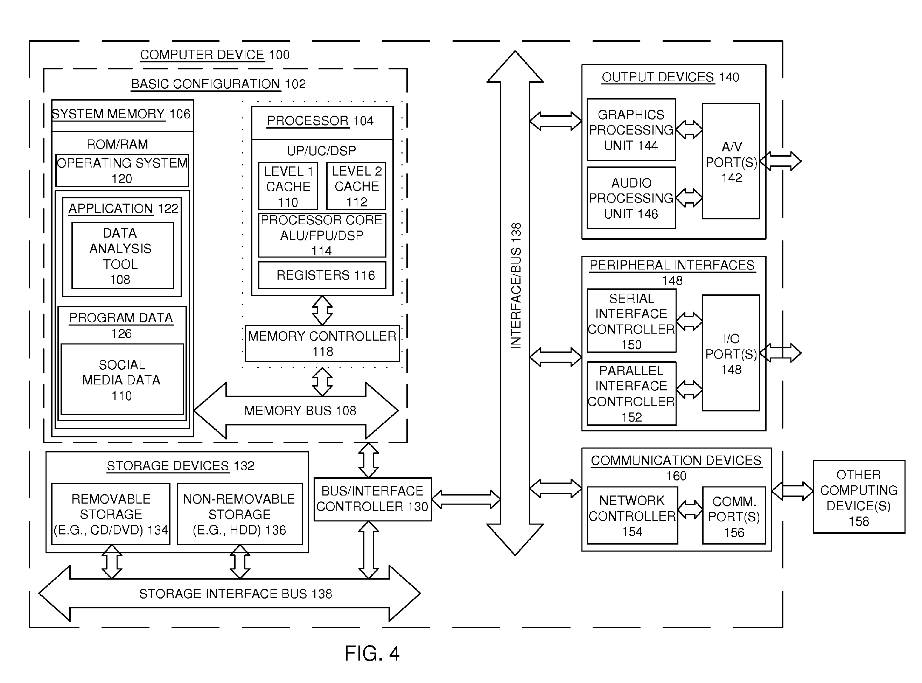

FIG. 4 is a block diagram illustrating an embodiment of a computer 100 that is configured to generate data solutions for a specific problem for data sets retrieved from various sources. The computer 100 is configured to execute instructions for a data solutions tool that performs the steps described in FIG. 3. In a very basic configuration 102, computer 100 typically includes one or more processors 104 and a system memory 106. A memory bus 124 may be used for communicating between processor 104 and system memory 106.

Depending on the desired configuration, processor 104 may be of any type including but not limited to a microprocessor (µP), a microcontroller (µC), a digital signal processor (DSP), or any combination thereof. Processor 104 may include one more levels of caching, such as a level one cache 110 and a level two cache 112, a processor core 114, and registers 116. An example processor core 114 may include an arithmetic logic unit (ALU), a floating point unit (FPU), a digital signal processing core (DSP Core), or any combination thereof. An example memory controller 118 may also be used with processor 104, or in some implementations memory controller 118 may be an internal part of processor 104.

Depending on the desired configuration, system memory 106 may be of any type including but not limited to volatile memory (such as RAM), non-volatile memory (such as ROM, flash memory, etc.) or any combination thereof. System memory 106 may include an operating system 120, one or more applications 122, and program data 124. Application 122 include a data solutions tool 120 that is arranged to analyze a plurality of data sets received from different sources. Program data 126 may include social media data, marketing data, sales data and the like. In some embodiments, application 122 may be arranged to operate with program data 126 on operating system 120 such that interaction between the dispensing devices and external entities are monitored. This described basic configuration 102 is illustrated in FIG. 4 by those components within the inner dashed line.

Computer 100 may have additional features or functionality, and additional interfaces to facilitate communications between basic configuration 102 and any required devices and interfaces. For example, a bus/interface controller 130 may be used to facilitate communications between basic configuration 102 and one or more data storage devices 132 via a storage interface bus 138. Data storage devices 132 may be removable storage devices 134, non-removable storage devices 136, or a combination thereof. Examples of removable storage and non-removable storage devices include magnetic disk devices such as flexible disk drives and hard-disk drives (HDD), optical disk drives such as compact disk (CD) drives or digital versatile disk (DVD) drives, solid state drives (SSD), and tape drives to name a few. Example computer storage media may include volatile and nonvolatile, removable and non-removable media implemented in any method or technology for storage of information, such as computer readable instructions, data structures, program modules, or other data.

System memory 106, removable storage devices 134 and non-removable storage devices 136 are examples of computer storage media. Computer storage media includes, but is not limited to, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which may be used to store the desired information and which may be accessed by computer 100. Any such computer storage media may be part of computer 100.

Computer 100 may also include an interface bus 138 for facilitating communication from various interface devices (e.g., output devices 140, peripheral interfaces 148, and communication devices 160) to basic configuration 102 via bus/interface controller 130. Example output devices 142 include a graphics processing unit 144 and an audio processing unit 146, which may be configured to communicate to various external devices such as a display or speakers via one or more A/V ports 142. Example peripheral interfaces 148 include a serial interface controller 150 or a parallel interface controller 152, which may be configured to communicate with external devices such as input devices (e.g., keyboard, mouse, pen, voice input device, touch input device, etc.) or other peripheral devices (e.g., printer, scanner, etc.) via one or more I/O ports 148. An example communication device 160 includes a network controller 154, which may be arranged to facilitate communications with one or more other computer s 158 over a network communication link via one or more communication ports 156.

The network communication link may be one example of a communication media. Communication media may typically be embodied by computer readable instructions, data structures, program modules, or other data in a modulated data signal, such as a carrier wave or other transport mechanism, and may include any information delivery media. A "modulated data signal" may be a signal that has one or more of its characteristics set or changed in such a manner as to encode information in the signal. By way of example, and not limitation, communication media may include wired media such as a wired network or direct-wired connection, and wireless media such as acoustic, radio frequency (RF), microwave, infrared (IR) and other wireless media. The term computer readable media as used herein may include both storage media and communication media.

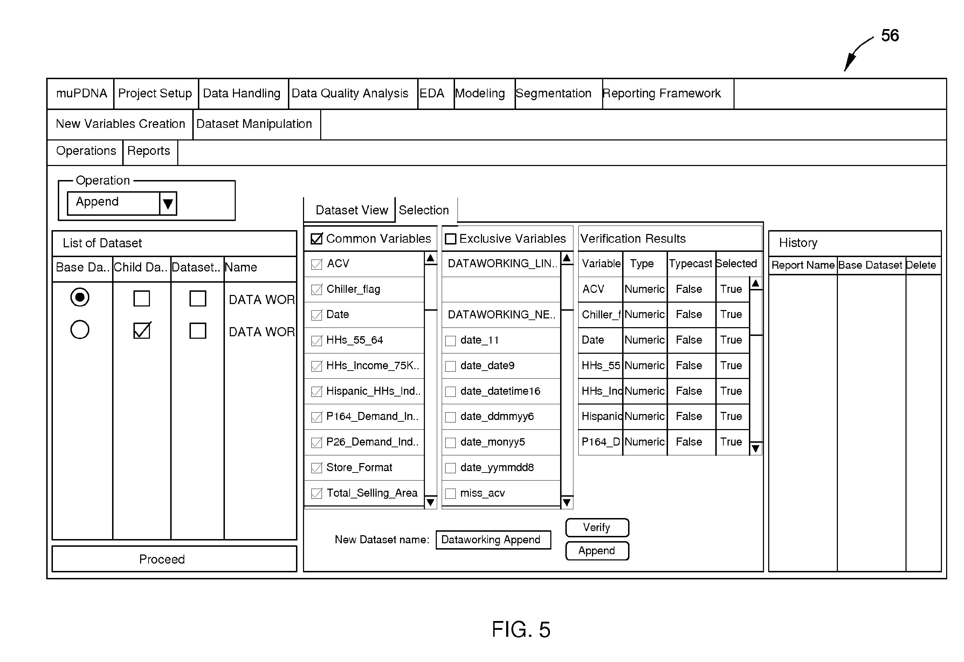

Computer 100 may be implemented as a portion of a small-form factor portable (or mobile) electronic device such as a cell phone, a personal data assistant (PDA), a personal media player device, a wireless web-watch device, a personal headset device, an application specific device, or a hybrid device that include any of the above functions. Computer 100 may also be implemented as a personal computer including both laptop computer and non-laptop computer configurations. As described above, the data analysis tool and system is configured to analyze social media data retrieved from social media platforms. The data solutions tool and system may include a graphical user interface to facilitate a user to provide input data and select required operations provided by the data solutions system. Some example user interface screens are described below with reference to FIG. 5 through FIG. 12.

FIG. 5 is a screen shot of a graphical user interface that enables a user such as a data analyst, to perform data handling operations on the data sets to generate analytics data sets. The data handling module enables the data analyst to add new variables or manipulate existing data sets as shown in screen 56. The data analyst may also select common and exclusive variables for data sets and generate verification results. The data analyst may also generate relevant reports out of data handling operations.

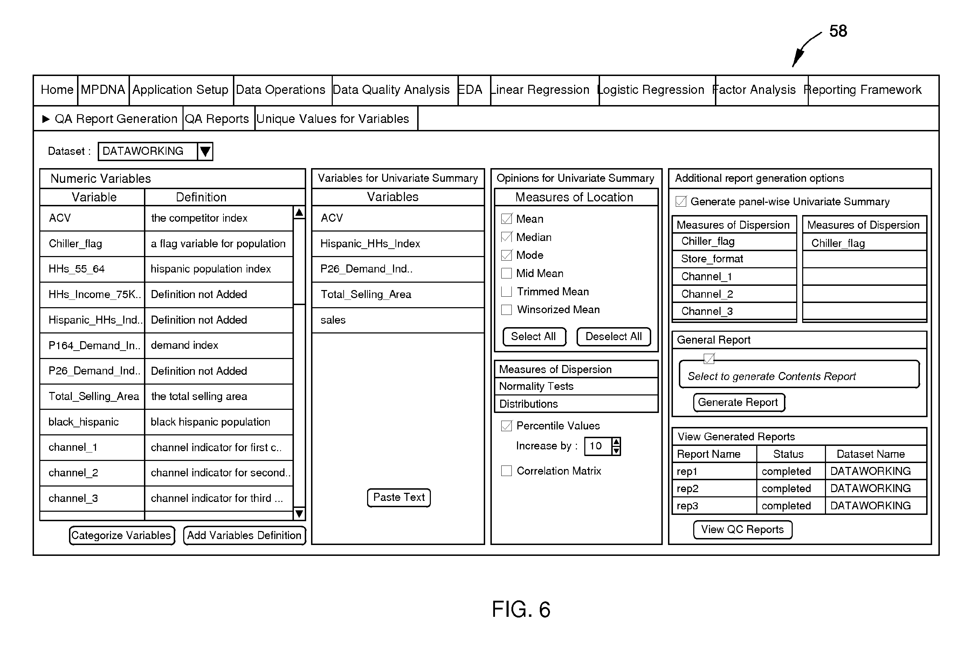

FIG. 6 is a screen shot of a visual representation of data quality analysis for analytic data sets. As can be clearly seen, in the screen shot 58 quality analysis supports quantitative (statistical) analysis through univariate summary. The univariate summary allows attributes like Measures of Locations, Measures of Dispersion, Normality tests, Distributions, Percentile values and the combinations thereof for multiple variables at a time.

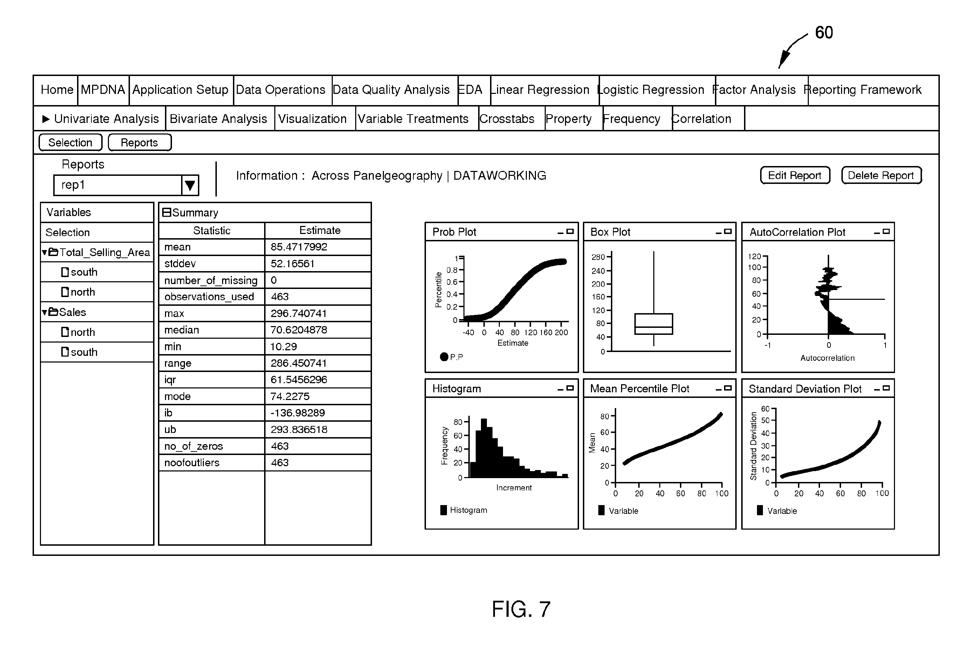

FIG. 7 is a screen shot of a visual representation of exploratory data analysis for analytic data sets. The screen shot 60 illustrates the univariate analysis of the analytic data sets represented in form of different plot types such as probability plot, box plot, auto-correction plot, histogram, mean percentile plot and standard deviation plot.

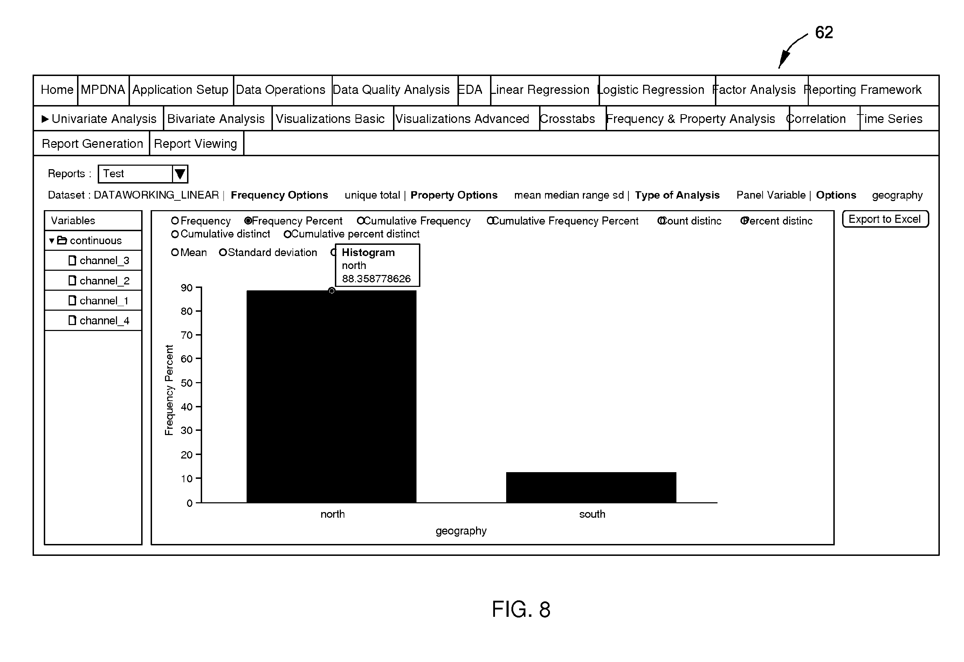

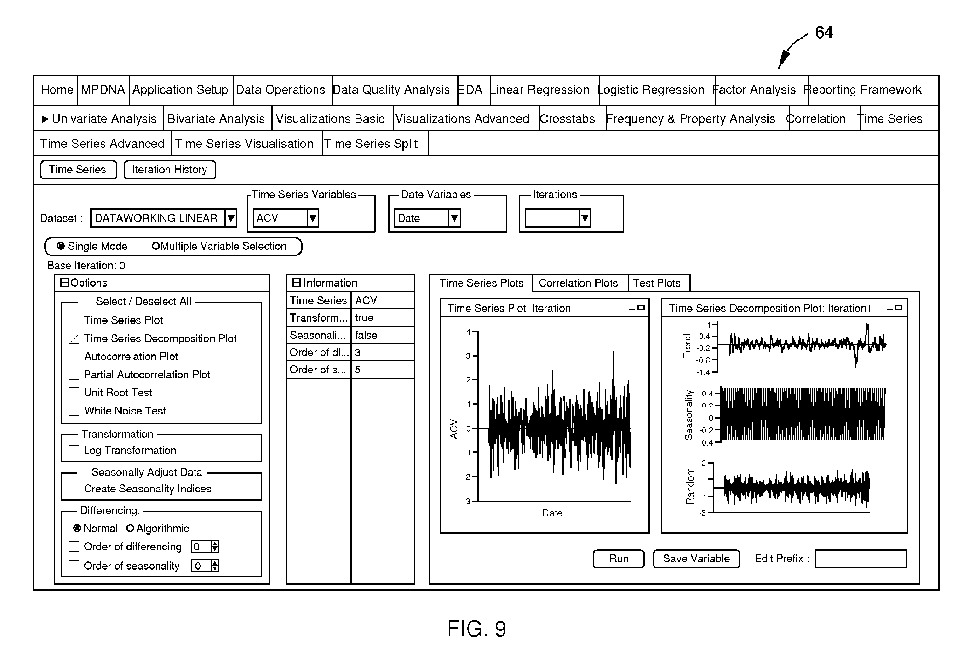

Similarly, the screen shot 62 of FIG 8 illustrate the frequency and property analysis for different variables of a given data set. The graphical user interface allows the data analyst to choose various parameters such as frequency, frequency percentage, distinct count, mean and the like to be visualized in graph or table format. FIG. 9 illustrates the time series analysis for the data set in multiple iterations. The screen shot 64 depicts time series plots for single iteration.

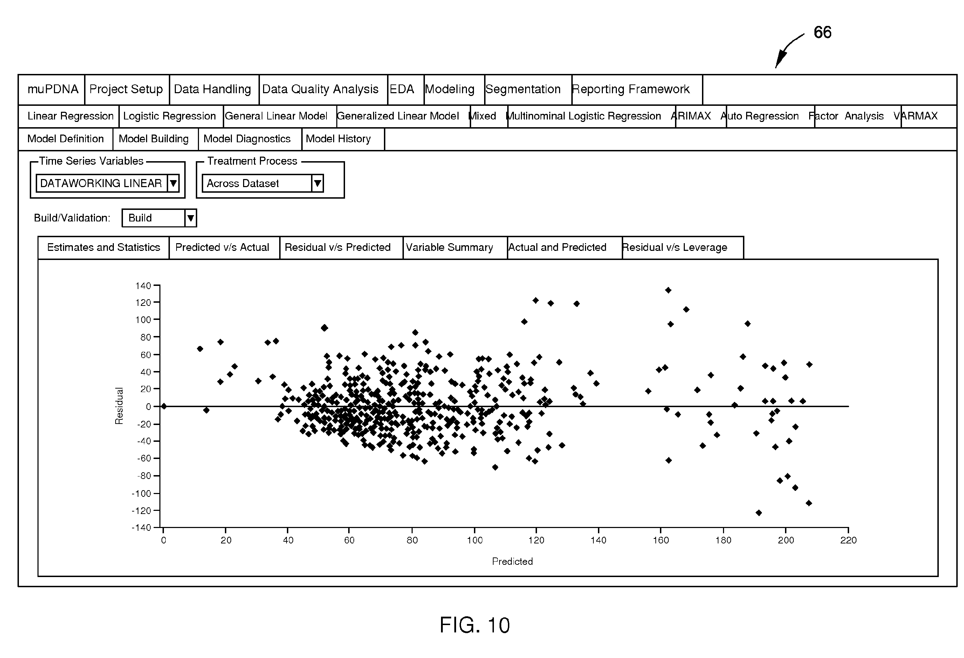

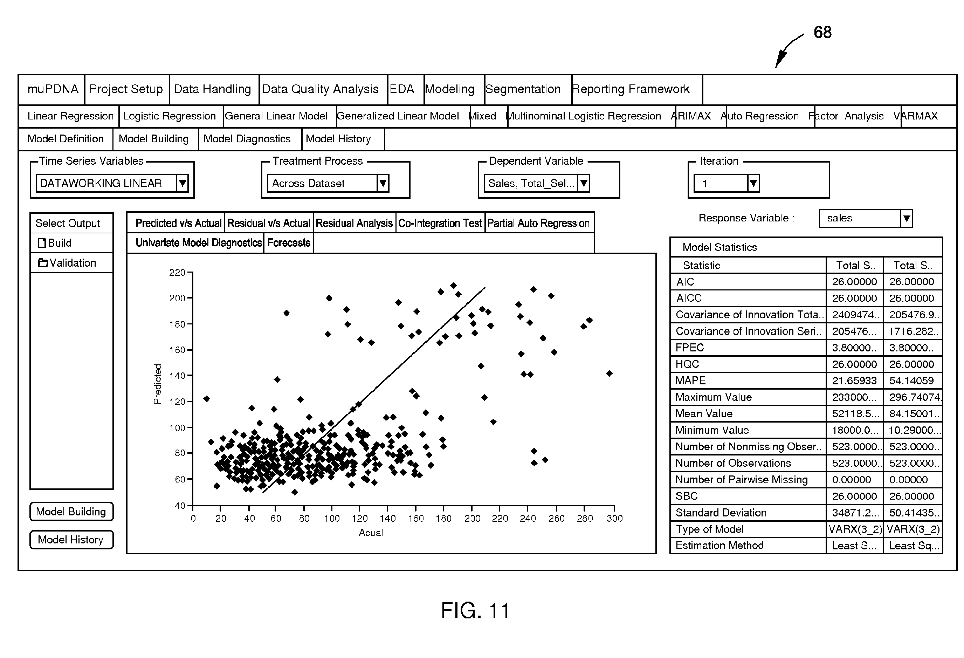

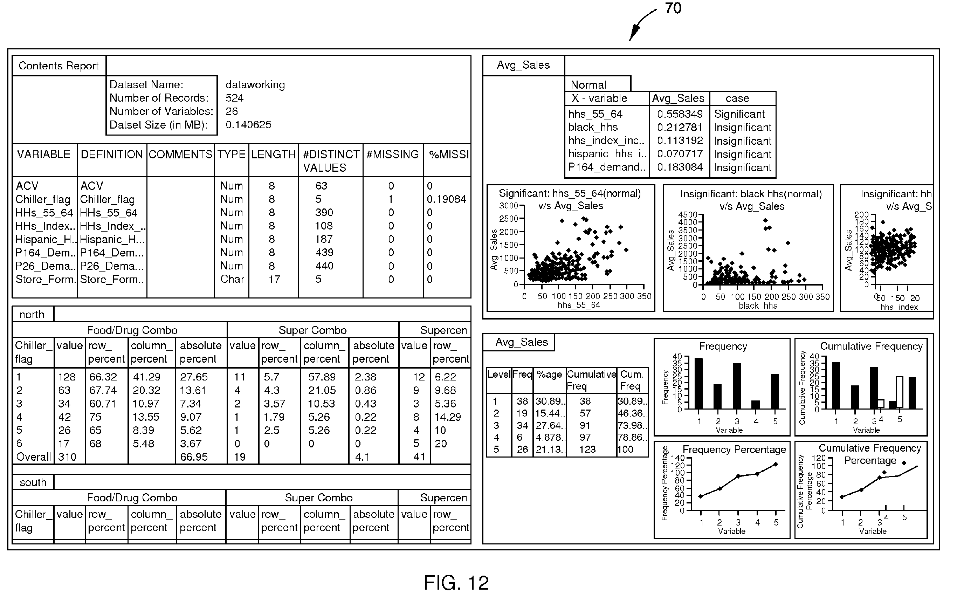

FIG. 10 is a screen shot of a data modeling allowing generating one or more models representing the analysis result of the exploratory data analysis. As can be seen, in the screen shot 66 and 68 of FIG. 11, data modeling allows possibility of model definition, model building, model diagnostic and visualizing history of model under various categories such as linear regression, logistic regression, VARMAX, ARIMAX and the like. One or more models are generated, during model building, based on a mean, variance and co-variance of the analytical data set. FIG 12 is a screen shot 70 of various reports and charts or graphs which could be generated such as content report, average sales report based on the data analysis done at various stages by the data analyst.

It will be understood by those within the art that, in general, terms used herein, and especially in the appended claims (e.g., bodies of the appended claims) are generally intended as "open" terms (e.g., the term "including" should be interpreted as "including but not limited to," the term "having" should be interpreted as "having at least," the term "includes" should be interpreted as "includes but is not limited to," etc.). It will be further understood by those within the art that if a specific number of an introduced claim recitation is intended, such an intent will be explicitly recited in the claim, and in the absence of such recitation no such intent is present.

For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to embodiments containing only one such recitation, even when the same claim includes the introductory phrases "one or more" or "at least one" and indefinite articles such as "a" or "an" (e.g., "a" and/or "an" should be interpreted to mean "at least one" or "one or more"); the same holds true for the use of definite articles used to introduce claim recitations. In addition, even if a specific number of an introduced claim recitation is explicitly recited, those skilled in the art will recognize that such recitation should be interpreted to mean at least the recited number (e.g., the bare recitation of "two recitations," without other modifiers, means at least two recitations, or two or more recitations).

While only certain features of several embodiments have been illustrated and described herein, many modifications and changes will occur to those skilled in the art. It is, therefore, to be understood that the appended claims are intended to cover all such modifications and changes as fall within the true spirit of the invention.

## Claims

1. A system for analyzing a plurality of data sets to determine one or more solutions for one or more problems, the system comprising:
an analytical module configured to receive a pluarlity of data sets from a plurality of sources and analyze the plurality of data sets using:
a data handling module configured to convert the plurality of data sets into an analytic data set;
an exploratory analysis module configured to determine a plurality of correlations exisiting within the analytic data set; wherein the plurality of correlations are used to determine the one or more solutions;
a graphical user interface coupled to the analytical module and configured to enable a user to interact with the analytical module; and
a storage module configured to store the plurality of data sets and the analytics data sets.

2. The system of claim 1, wherein the analytical module further comprises data modelling module configured to generate one or more models representative of the one or more solutions generated by the exploratory analysis module.

3. The system of claim 2, wherein the one or more models are generated based on a mean, variance and co-variance of the analytical data set.

4. The system of claim 1, wherein the analytical module further comprises a reporting module configured to enable the users to access, a plurality of reports generated by the exploratory analysis module and the data modelling module at a single location.

5. The system of claim 1, wherein the analytical module further comprises a quality analysis module coupled to the data handling module and configured to assess a quality of the analytics data set.

6. The system of claim 1, wherein the exploratory analysis module is configured to apply a univariate analysis on the analytic data set, wherein the univariate analysis comprises representing the analytic data set according to one or more statistical attributes.

7. The system of claim 1, wherein the exploratory analysis module is configured to apply a multivariate analysis on the analytic data set; wherein the buvariate analysis comprises determining a variation with respect to one or more statistical attributes.

8. The system of claim 7, wherein the exploratory analysis module is further configured to generate visual representations of the analytic data set.

9. The system of claim 1, wherein the analytical module further comprises a segmentation module configured to cluster the analytic data set based on an attribute, wherein the attribute is selected by the user.

10. The system of claim 8, wherein a plurality of boundary parameters used by the analytical module is defined by the user.

11. A computer-implemented system, comprising:
one or more processors;
one or more non-transitory computer-readable storage media containing instructions configured to cause the one or more processors to perform operations including:
receiving a plurality of data sets from a plurality of sources;
conditioning the plurality of data sets to generate an analytic data set;
performing exploratory data analysis on the analytic data set to determine a plurality of correlations existing within the analytic data set;
generating a plurality of models based on the results of the exploratory data analysis; wherein each model provides one or more solutions to achieve a predefined goal determined by a user.

12. The system of claim 11, further comprising assessing a quality of the analytic data set.

13. The system of claim 11, further comprising generating a plurality of reports for exploratory data analysis and data modelling.

14. The system of claim 13, further comprising storing the plurality of reports to enable the user to access the plurality of reports from a single location.

15. The system of claim 11, further comprising clustering the analytic data set based on an attribute selected by the user.
